# EUROPÄISCHE PATENTSCHRIFT

(11) **EP 0 849 965 B1**
(45) Veröffentlichungstag und Bekanntmachung des Hinweises auf die Patenterteilung: **25.10.2000**
(21) Anmeldenummer: 96120585.3
(22) Anmeldetag: 20.12.1996
(51) Int. Cl.: H04Q 7/32, H04M 1/72

(54) **Telefonvorrichtung**
Cordless telephone
Téléphone sans fil

(43) Veröffentlichungstag der Anmeldung: 24.06.1998
(73) Patentinhaber: E-Plus Mobilfunk GmbH, 40468 Düsseldorf (DE)
(72) Erfinder: Poppen, Dirk, Dipl.-Ing., 40822 Mettmann (DE); Jannet, Béchir, Dipl.-Ing., 41564 Kaarst (DE)
(74) Vertreter: Beyer, Rudi

(56) Entgegenhaltungen:
- EP-A- 0 660 628
- EP-A- 0 740 482
- WO-A-95/01070
- WO-A-95/23485
- DE-A- 19 520 024

## Beschreibung

Die Erfindung betrifft ein Telefonkommunikationssystem.

Mobilfunkendgeräte und Schnurlostelefone sowie dazugehörige Ladeeinrichtungen sind in der Bundesrepublik Deutschland aus C-Netz, D-Netz oder E-Netz oder als DECT-, CT1-, CT2-Telefone in vielerlei Varianten vorbekannt. Diese Telefone bedienen heute ausschließlich ein Netz (Mobilfunk-/Festnetz) bzw. einen technischen Standard (z. B. GSM 900, DCS 1800, DECT).

Mobilfunkendgeräte, die in der Lage sind, mehrere Netze oder technische Standards zu bedienen, befinden sich gegenwärtig in der Entwicklung und werden vermutlich in Kürze auf dem Markt unter den Begriffen Dual Mode-, Dual Band-, Multi Mode- oder Multi Band-Telefone erwartet. Solche Telefone, die in mehreren Netzen zu nutzen sind, sollen eine verbesserte Erreichbarkeit (z. B. In-Haus und Außer-Haus) und eine erhöhte Qualität in Verbindung mit den für Kunden jeweils niedrigsten Tarifen erzielen.

Für den Betrieb als Schnurlostelefon am Festnetz ist immer eine sogenannte Basisstation erforderlich, die die Umwandlung zwischen Funksignalen und Leitungssignalen übernimmt. Üblicherweise - jedoch nicht zwingend - wird diese Basisstation zusätzlich als Ladestation für das akkubetriebene Mobilfunkendgerät eingesetzt.

Bei Dual Mode-, Dual Band-, Multi Mode- oder Multi Band-Telefonen erweist es sich als nachteilig, daß gegenüber sogenannten Single Mode Telefonen (ausschließlich ein Mobilfunkstandard oder ein Schnurlos-Standard) ein vielfach erhöhter technischer Aufwand im Mobilfunkendgerät oder im Schnurlostelefon zu realisieren ist. Dieser Aufwand erfordert nicht nur höhere Entstehungskosten, sondern kann sich zum Beispiel auch in erhöhtem Leistungsverbrauch (Akku-Problem) oder größerem Endgeräte-Volumen niederschlagen. Weiterhin muß davon ausgegangen werden, daß zu einem großen Zeitanteil lediglich ein Teil dieses Endgerätes benutzt, aber die Technik für alle bedienbaren Netze vom Nutzer ständig transportiert wird.

In der WO 90/14729 (PCT/US 90/01797) wird der Anschluß über einen nicht näher beschriebenen Audio- und Datenbus eines Mobilfunktelefons an ein konventionelles schnurgebundenes Telefon beschrieben, das nicht an ein Festnetz angeschlossen ist. Der Schwerpunkt dieser Vorveröffentlichung liegt bei dem Umgehen des Drückens der bei Mobilfunktelefonen notwendigen "Sende"-Taste nach Eingabe der gewünschten Telefonnummer an dem Festnetzapparat, der dort in der Regel nicht vorhanden ist. Die Druckschrift beschreibt somit lediglich einen speziellen Teil einer Kombination einer Handhabungsangleichung für die Richtung von dem Festnetztelefon zum Mobilfunknetz. Es ist keinerlei Doppelanschluß an Festnetz- und Mobilfunknetz und den damit verbundenen Dienst der Verfügbarkeiten dargestellt oder beschrieben.

Die DE 40 26 180 A1 ergänzt ein bekanntes schnurgebundenes Telefon, welches ausschließlich an ein Festnetz angeschlossen ist, um einen oder mehrere schnurlose Handapparat(e), so daß sich Funktionen einer Nebenstellenanlage in einer kompakten Einheit ergeben können. Der parallele Anschluß der Kombination von Haupt- und Nebenstellenanschluß an ein Mobilfunknetz ist nicht erwähnt.

Aus der DE 43 29 721 A1 ist eine Schnittstelle zwischen verschiedenen analogen Telekommunikations-Endgeräten, wie zum Beispiel Telefone, Anrufbeantworter, Telefaxgeräte oder Modem, und beliebigen Funkgeräten vorbekannt, so daß das Einsatzgebiet der Telekommunikations-Endgeräte von einer ursprünglichen Nutzung an einem Festnetz zur Nutzung an einem Funksystem erweitert wird. Dies wird durch eine Schnittstelle erreicht, die durch eine universelle Koppeleinrichtung dargestellt wird. Dabei wird davon ausgegangen, daß erstens zur Kommunikation von einem Teilnehmer über eine solche Koppeleinrichtung auch der Angerufene über eine entsprechende Koppeleinrichtung verfügt, und zweitens die Verbindung direkt zwischen den Funkgeräten, und zwar ohne Unterstützung durch ein auf terrestrischen oder satellitengestützten Mobilfunknetz erfolgt (Walky-Talky-Prinzip). Der Koppeleinrichtung wird dabei eine Rufnummer zugeordnet.

Aus dieser Druckschrift ist nicht zu entnehmen, daß verschiedene Telekommunikations-Endgeräte parallel an einem Festnetz und an einem Mobilfunknetz angeschlossen sind, oder daß ein Verkehr zwischen mobilem Funksystem oder Festnetz erfolgt.

Die US-PS 5,422,934 betrifft eine Sende-/Empfangsverstärkereinrichtung für Autos, die den üblichen kleinen Handfunkgeräten zu einer größeren Sendeleitung verhelfen. Damit sollen die Sende- und Empfangsqualitäten für das Telefonieren in Autos über Mobilfunknetze verbessert werden. Diese Druckschrift betrifft somit lediglich das Telefonieren in Autos über Mobilfunknetze.

Aus der DE 43 10 230 A1 ist ein Sende-/Empfangsverstärker für Mobilfunkendgeräte vorbekannt, welches im Gegensatz zur US 5,422,934 nicht nur in Autos, sondern allgemein eine Leistungseinheit einem Endgerät vorschaltet. Ebenfalls erweitert wurde der Funktionsumfang zum Beispiel um eine mögliche Frequenzumsetzung oder Infrarotübertragung zwischen der Funktionseinheit und der Leistungseinheit (Mobilfunkendgerät). Darüber hinaus kann das Mobilfunkgerät auch ohne zusätzliche Leistungseinheit eingesetzt werden. Weder die Leistungseinheit noch die Funktionseinheit verfügen über einen Festnetzanschluß, so daß Festnetz- und Mobilfunknetz nicht kombiniert werden können.

Die WO 94/17639 (PCT/CA 94/00020) beschreibt ein Interface, welches technisch den parallelen Zugang zu zellularen Mobilfunknetzen und zu Festnetzen über ein Endgerät und unter einer Rufnummer ermöglichen soll. Dieses Interface enthält eine vollständige Sende-/Empfangseinrichtung für den Mobilfunk- und Festnetzzugang. An das Interface werden ein Hörer und ein weiteres Interface zu einem Festnetz angeschlossen. Das Interface ist mobil und kann sowohl im Haus als auch im Auto betrieben werden. Dazu sind unterschiedliche Stromversorgungsanschlüsse vorgesehen.

Damit liegt eine Trennung von Hörer und Interface im Falle der alleinigen Nutzung als Mobilfunkendgerät und in der im Interface enthaltenen Sende/Empfangseinrichtung für den Mobilfunkzugang vor.

Des weiteren kann bei Verlagerung des Interfaces, zum Beispiel aus dem Haus in ein Auto und damit Entkoppelung vom Festnetzzugang kein Gespräch mehr vom und zum Festnetz im Haus durchgeführt werden, sofern kein weiterer Anschluß an das Festnetz oder an dem Festnetz-Interface vorhanden ist.

Aus der DE 44 00 832 A1 ist ein transportables Dual Mode Endgerät vorbekannt, welches über die Möglichkeit verfügt, über Mobilfunk- und Festnetze zu telefonieren. Für den Festnetzbereich wird die Funktion als Schnurlostelefon, das heißt Zugang über eine ortsfeste Basisstation, angesprochen. Des weiteren ist hieraus zu entnehmen, weniger handliche Funkgeräte, wie zum Beispiel in KFZ eingebaute, als Zwischenstation (Relaisbetrieb) zu benutzen.

Unter dem recht neuen Begriff des Telekommunikations-Adapters (TK-Adapter) wird eine Funktionseinheit verstanden, die einerseits an eine bestehende Nebenstellenanlage angeschlossen wird und andererseits über eine Funkverbindung zu einem Mobilfunknetz verfügt. Der TK-Adapter ermöglicht ohne Umweg über ein Festnetz die direkte Durchwahl von Nebenstellentelefonen zu Mobilfunktelefonen und umgekehrt. Die Nebenstellenanlage bleibt weiterhin an ein Festnetz angeschlossen.

Der TK-Adapter weist eine eigene Mobilfunk-Rufnummer auf und ist aus der Sicht des Mobilfunknetzes ein Teilnehmer-Endgerät. Die Weiterleitung eingehender Anrufe aus dem Mobilfunknetz erfolgt ausschließlich über Draht und Signalumsetzung in die Nebenstellenanlage. Es ist nicht möglich, den TK-Adapter als selbständiges Mobilfunkendgerät mobil zu betreiben. Vielmehr bleibt es stationär über Signalleitungen an die TK-Anlage und über Stromversorgungsleitungen an den Standort gebunden. Ebenfalls ist der TK-Adapter nicht eigenständig an ein Festnetz angeschlossen.

In der WO-A-95 01070 A wird ein Verfahren zur Kommunikation in einer Umgebung von mehreren unterschiedlichen Telekommunikationsnetzwerken mit Hilfe automatisierter Rufumleitungsverfahren beschrieben. Diese Methode ist zusätzlich dadurch charakterisiert, daß sogenannte Multinetwork Terminals sich nach den vordefinierten Kriterien selbständig für die Verbindung zum jeweiligen Telekommunikationsnetzwerk entscheiden, wobei die Multi-Mode Endgeräte notwendige Umleitungsprozeduren zur Rufumleitung in den jeweiligen Telekommunikationsnetzen veranlassen. Für den Nutzer wird durch die automatisierte initiierte Aktivierung bzw. Deaktivierung der Rufumleitung in unterschiedlichen Netzen eine Vereinfachung der mitunter sehr unterschiedlichen und komplexen Prozeduren zur Einleitung und Durchführung von Rufumleitungen in den unterschiedlichen Netzen erzielt. Die mögliche Multinetzwerk-Umgebung wird beschrieben als Kombination von Festnetzen, Mobilfunknetzen und Schnurlos-Telefonnetzen. Zur Übermittlung der Aktivierung/Deaktivierung der Rufumleitung wird das in heutigen Telekommunikationsnetzen übliche Mehrfrequenzwahlverfahren eingesetzt. In einer ersten Ausführungsform wird das Multinetwork Terminal als eine Kombination von Schnurlos-Telefon und MobilfunkTelefon beschrieben. Diese Kombination wird heute in aller Regel als Dual Mode-Telefon bezeichnet. In einem zweiten Beispiel wird das Multinetwork Terminal in einer Ausführungsform als stationäres Terminal mit Festnetzanschluß und der Einsteckmöglichkeit eines Mobilfunkgerätes für den Funkzugang zu einem Mobilfunknetz dargestellt. An den Ausgang des Multinetwork Terminals können ein Festnetztelefon oder ein Schnurlostelefon und gegebenenfalls Zusatzgeräte wie zum Beispiel ein Anrufbeantworter oder ein Telefaxgerät angeschlossen werden. Die Funktionalität beider Ausführungsformen ist grundsätzlich identisch. Das stationäre Gerät verfügt zusätzlich über die Möglichkeit, zwei Rufe unabhängig voneinander gleichzeitig aus den sogenannten "Incoming Lines" zu den sogenannten "Outgoing Lines" durchzuschalten. Eine Kontrolleinrichtung verfügt jedoch über keine Möglichkeit, die Signale beider durchgeschalteter Rufe zu kombinieren. Bei den Rufumleitungsprozeduren werden die Verbindungen zwischen dem Multinetwork Terminal und den verfügbaren Telekommunikationsnetzen immer vollständig durchgeschaltet. Dadurch ist es zum Beispiel nicht möglich, ein Anklopfen aus dem Mobilfunknetz zusätzlich zu einer stehenden Gesprächsverbindung zum Festnetz zu realisieren. Ebenso ist beispielsweise ein Makeln zwischen zwei stehenden Verbindungen zum Mobilfunk- und Festnetz zu einer Leitung nicht möglich. Es erfolgt somit keine digitale Signal- oder Protokollumsetzung zwischen verschiedenen Netzprotokollen (Festnetz- und Mobilfunknetz in Schnurlos-System). Die Umsetzung geschieht in den jeweiligen Telekommunikationsnetzen auf der Basis der jeweiligen Leistungsfähigkeit der Telekommunikationsnetze. Es besteht von einem am Multinetwork Terminal angeschlossenen Festnetz oder Schnurlostelefon lediglich eine einzige schaltbare Verbindung zu einem vorab gewählten Telekommunikationsnetzwerk.

Anrufer, die einen Teilnehmer in einer nach dem Stand der Technik beschriebenen Multinetzumgebung erreichen wollen, werden zu dem Teil des Telekommunkationsnetzes (Festnetz, Mobilfunknetz, Schnurlos-Telefonnetz) geleitet, den das Multi-Mode-Endgerät vorgegeben hat.

Bei einem eingehenden Ruf erfolgt die Umwandlung der Signale zwischen Festnetzen und Mobilfunknetzen bereits in den Telekommunikationsnetzen auf der Vermittlungsebene vor Durchschalten der Verbindung zum Endgerät (vor Terminierung). Diese Form der Signalumwandlung geschieht heute regelmäßig, wenn aus einem Mobilfunknetz ein Festnetztelefon (oder umgekehrt) angerufen wird.

Die ferner in der WO-A-95 01070 A gezeigten Umschaltungen zwischen verschiedenen Eingängen (Schnurlos-, Mobilfunk- bzw. Festnetz) wird nicht näher erläutert. Nach der Beschreibung der Funktionalität der Control Unit entspricht dies einer Umschaltung auf Analogebene, das heißt, es findet keine Signalumsetzung statt.

Da die Rufumleitungen durch das Multinetwork Terminal durch Netzfunktion auf der Vermittlungsebene durchgeführt werden, gibt es keine Möglichkeit, gleichzeitig einen Anruf zum Beispiel aus dem Festnetz und aus dem Mobilfunknetz zusammenzuschalten. In dieser Vorveröffentlichung wird diese Einschränkung für das mobile Multinetwork Terminal explizit aufgeführt.

Der Erfindung liegt die Aufgabe zugrunde, ein Telekommunikationssystem so zu gestalten, daß kostengünstig und baueinfach die Nutzung von Mobilfunk- und Festnetzanschlüssen in geschlossenen Räumen unter Verwendung von lediglich mindestens je eines Single Mode Schnurlostelefons und eines Single Mode Mobiltelefons möglich sein soll, wobei die Nachteile von Dual Mode Geräten vermieden werden sollen.

Die Aufgabe wird durch die in **Patentanspruch 1** wiedergegebenen Merkmale gelöst.

In den **Patentansprüchen 2** bis **10** sind erfinderische und sehr vorteilhafte Ausgestaltungen gemäß der Erfindung beschrieben.

Das erfindungsgemäße Telekommunikationssystem besteht im wesentlichen aus einer aus Baugruppen zusammengesetzten Telekommunikations-Basisstation für den typischen Gebrauch in geschlossenen Räumen, die einerseits eine Aufnahme für mindestens ein Mobilfunkendgerät und andererseits eine Aufnahme für mindestens ein mobiles Schnurlostelefon aufweist, des weiteren über Antennen- bzw. Antennenanschlüsse für die Funksysteme zur Erzielung eines optimalen Empfangs sowie zusätzlich einen drahtgebundenen Anschluß an ein Festnetz verfügt und das im wesentlichen aus einer Funktionseinheit zur wechselseitigen Signalumsetzung zwischen Mobilfunk- und Festnetzsignalen besteht sowie gegebenenfalls das Aufladen der Endgeräte-Akkumulatoren ermöglicht. Die Erfindung schließt die Signalverarbeitung innerhalb der Dual Mode Basisstation ein, die für eine Konversion zwischen den verschiedenen Signalen der Telekommunikationssysteme notwendig ist. Weiterhin umfaßt die Erfindung die automatische Steuerung des jeweiligen Signalwegs in den unterschiedlichen Betriebsarten.

Der Dual Mode Basisstation werden die unterschiedlichen Signale der Mobilfunk- und Festnetze über Funk- bzw. Drahtanschluß zugeleitet, die diese wiederum in ein Funksignal eines typischen Schnurlostelefon-Standards, z. B. GSM, umsetzt. Zu diesen Signalen gehören Sprach- und Datensignale, notwendige Signalisierungssignale sowie spezifische Signale der angeschlossenen Telekommunikationssysteme wie zum Beispiel Kurznachrichtensignale (Mobilfunk). Die Dual Mode Basisstation ermöglicht damit den seriellen oder parallelen Zugriff auf unterschiedliche Telekommunikationssyteme mit nur einem portablen Endgerät.

Außerdem ermöglicht die Dual Mode Basisstation durch eine entsprechende Aufstellung den schwierigen Empfang von Mobilfunksystemen in geschlossenen Räumen und verbessert durch eine Umsetzung in das Funksignal eines schnurlosen Telefonstandards die Sende- und Empfangsmöglichkeit von Mobilfunksystemen, die in der Regel keine Funkversorgung von geschlossenen Räumen garantieren können.

Die Dual Mode Basisstation wird für Mobilfunksysteme erst durch das Einstecken eines vorhandenen Mobilfunk-Endgeräts (Handy) aktiv, sie verfügt über kein eigenes Sende-/Empfangsteil für den Mobilfunkanschluß. Die Telefoniermöglichkeit über ein öffentliches oder privates Festnetz bleibt ständig bestehen.

Für die Dual Mode Basisstation werden keinerlei Änderungen bezüglich geltender technischer Normen und Standards, lizenzrechtlicher oder regulatorischer Auflagen notwendig.

Aus praktischen Erwägungen wird die Dual Mode Basisstation mit einer Funktion als Ladegerät gekoppelt.

Die Dual Mode Basisstation beinhaltet somit fünf Grundfunktionen:
1. Funktion einer entsprechenden Basisstation eines üblichen Schnurlostelefons, welches an ein Festnetz angeschlossen ist.
2. Funktion eines noch nicht existierenden Umsetzers von Mobilfunksignalen in schnurlose Telefonsignale und umgekehrt.
3. Funktion eines Verstärkers, eines sogenannten "Indoor Repeaters" für den Mobilfunkbereich.
4. Funktion als Ladeschale für Mobilfunk-Endgeräte und Schnurlostelefon-Endgeräte.
5. Automatische Umschaltung zwischen den verschiedenen Signalwegen.

Der Teilnehmer ist gleichzeitig Kunde des PSTN, das heißt, er besitzt einen PSTN/ISDN-Anschluß und eine PSTN/ISDN-Rufnummer.

Außerdem ist er Mobilfunkkunde und besitzt eine Handy-Rufnummer.

### Gespräche entgegennehmen

Die Art des Anrufs kann am Tonruf erkannt werden. Es lassen sich unterscheiden:
- GSM/DCS Anrufe
   Anrufe aus dem Mobilfunknetz zur entsprechenden Handy-Nummer.
- PSTN/ISDN Anrufe
   Anrufe aus dem öffentlichen Telefonnetz zur entsprechenden PSTN-Nummer.
   Sowohl PSTN-Anrufe als auch Mobilfunkanrufe können im Schnurlostelefon entgegengenommen werden. Es bleibt jedoch möglich, durch das Herausziehen des Mobilfunkendgerätes die Mobilfunkanrufe direkt mit dem Mobilfunk-Endgerät entgegenzunehmen. In diesem Fall sind weiterhin Anrufe aus dem Festnetz zum Schnurlostelefon möglich, da die Systeme entkoppelt sind.

### Externes Gespräch einleiten

Mit Hilfe einer Ausscheidungskennziffer (z. B. "0" für PSTN und "7" für Mobilfunk) wird dem Teilnehmer die Möglichkeit gegeben, vom PP heraus eine Verbindung sowohl über das Festnetz als auch über ein Mobilfunknetz aufzubauen.
- PSTN-Gesprächspartner anrufen
- Mobilfunk-Gesprächspartner anrufen

### Anklopfen

Gespräche können geführt werden, ohne befürchten zu müssen, für andere Anrufe nicht erreichbar zu sein. Ist eine Leitung besetzt, so werden über die andere Leitung ankommende Gespräche durch das "Anklopfen" signalisiert.

### Endgeräte

Beispielsweise können bei einem erfindungsgemäßen System z. B. maximal sechs DECT-Schnurlostelefone durch eine Basisstation betrieben werden. Diese haben Durchwahlnummern und können somit direkt angewählt werden.

Ein durch das Anklopfen signalisiertes Gespräch kann von einem zweiten Schnurlostelefon entgegengenommen werden.

Für ausgehende Rufe gilt: Ist eine Leitung besetzt, so kann das zweite Schnurlostelefon ein Gespräch über eine andere Leitung aufbauen.

### Kurzmitteilungen

Das Antreffen einer Kurzmitteilung wird akustisch und visuell angezeigt. Das Lesen oder Bearbeiten der Nachricht ist nur nach dem Abnehmen des Mobilfunk-Handys möglich. Dies gilt auch, wenn der Teilnehmer eine Kurzmitteilung senden will.

Weitere Merkmale und Vorteile ergeben sich aus der nachfolgenden Beschreibung der Zeichnung, in der die Erfindung beispielsweise veranschaulicht ist. Es zeigen:
- Fig. 1: eine schematische Darstellung über die Funktionsweise gemäß der Erfindung;
- Fig. 2: eine Basisstation in schematischer Darstellung;
- Fig. 3: eine Basisstation beim "Anklopfen";
- Fig. 4: eine Systemübersicht;
- Fig. 5: die aus Fig. 4 ersichtliche Systemübersicht mit anderen Bezeichnungen;

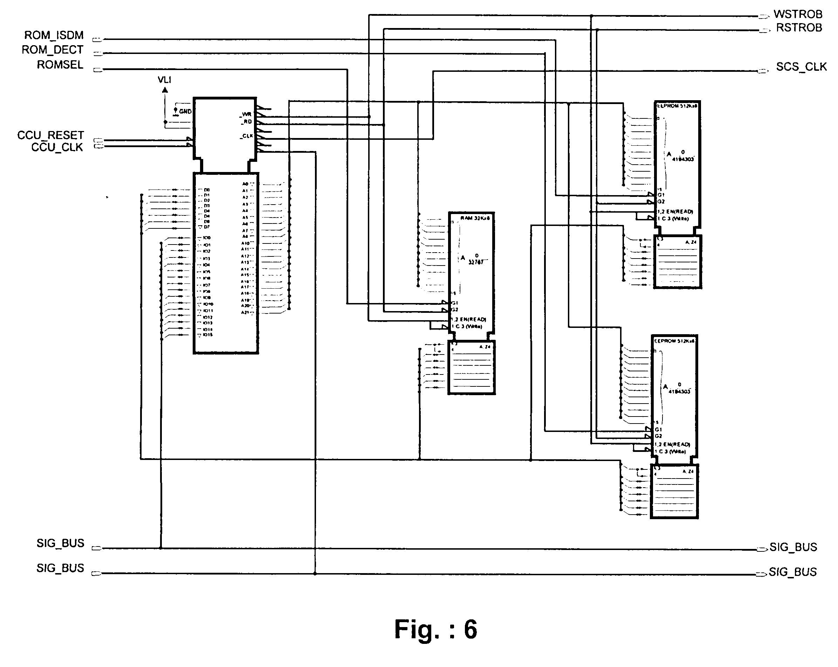

- Fig. 6: eine Kanalsteuereinheit;

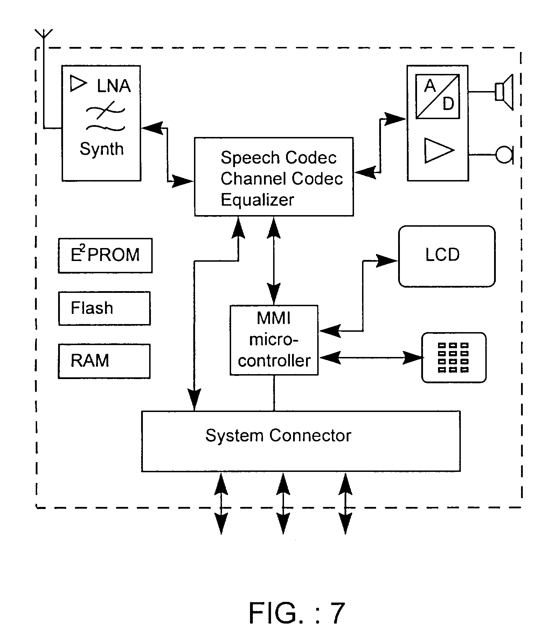

- Fig. 7: eine Schaltungsanordnung in einem Mobilfunkendgerät (Handy);

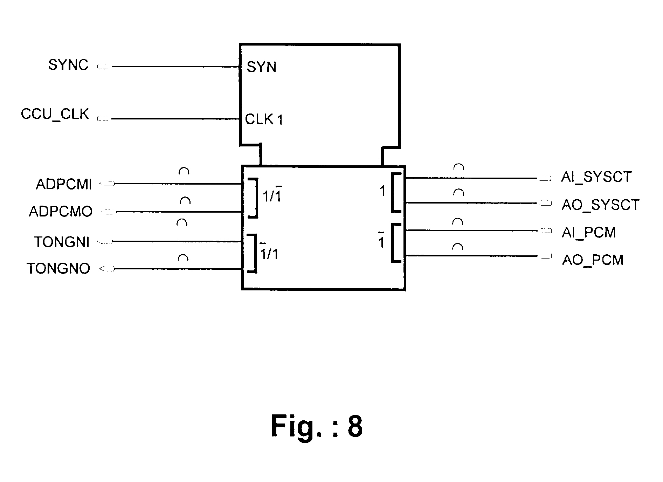

- Fig. 8: einen Speech Codec Switch in detaillierterer Darstellung.

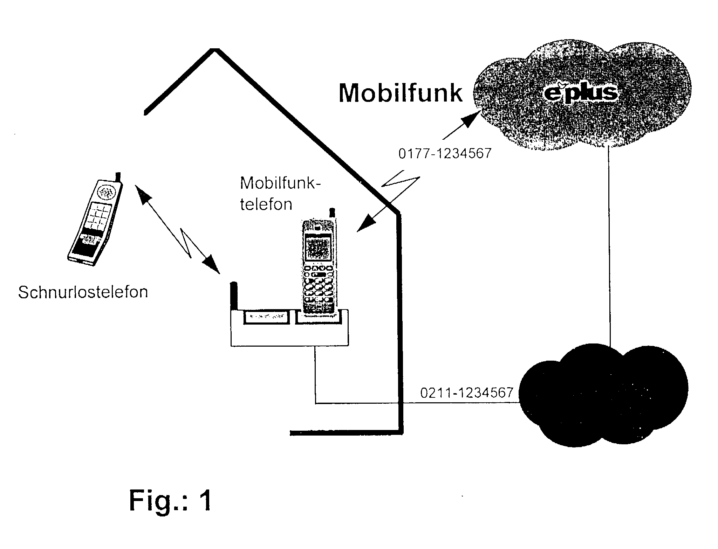

Fig. 1 zeigt, ohne daß allerdings die Erfindung hierauf beschränkt ist, die Anwendung der in Europa am weitesten verbreitesten Systeme im Festnetz-(PSTN), Schnurlostelefon-(DECT) und Mobilfunkbereich (GSM/DCS), wobei durch die Anordnung der Basisstation in einem schematisch angeordneten Haus die Verwendung in geschlossenen Räumen dokumentiert werden soll.

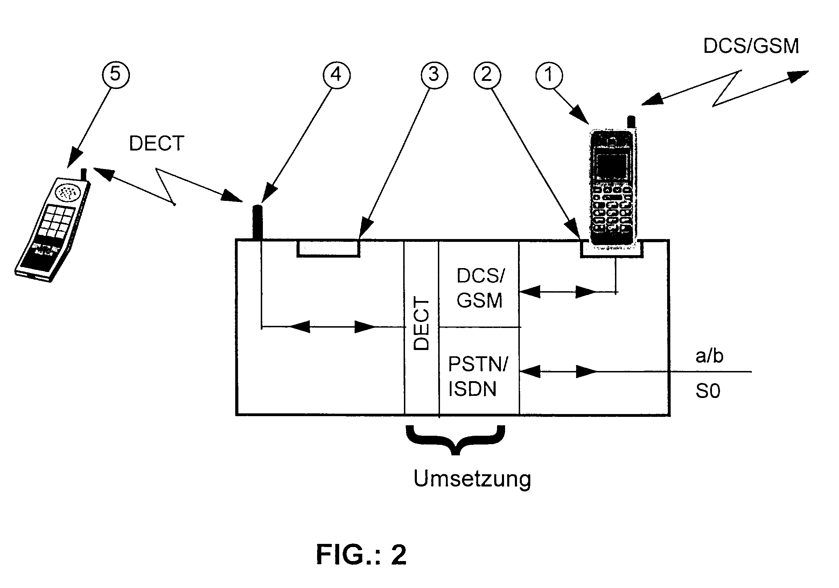

Aus Fig. 2 ist eine Basisstation detaillierter zu erkennen. Hierin bedeuten 1 ein DCS/GSM-Handy für den Mobilfunk, 2 eine DCS/GSM-Ladestation mit Sprachschnittstelle und 3 eine DECT-Ladestation, während 4 eine DECT-Antenne veranschaulicht. Bei 5 ist ein DECT-Portable Part, nämlich ein Schnurlostelefon, schematisch dargestellt. Das Bezugszeichen 6 zeigt die Stromversorgung, die vorliegend durch einen schematisch angedeuteten Stecker dokumentiert werden soll. Bei 7 ist eine DCS-GSM-Außenantenne veranschaulicht, die aber nicht in sämtlichen Fällen vorhanden zu sein braucht. Durch das Einstecken der DCS/GSM-Mobilstation in die Basisstation wird diese in die Lage versetzt, Mobilfunk-Signale zu empfangen. Diese werden dann in DECT-Signale umgesetzt. Über die DECT-Antenne 4 wird dann die Verbindung zum DECT-Handy, also zum Schnurlostelefon, aufgebaut. In ähnlicher Weise werden auch die PSTN/ISDN Signale umgesetzt und über DECT abgestrahlt.

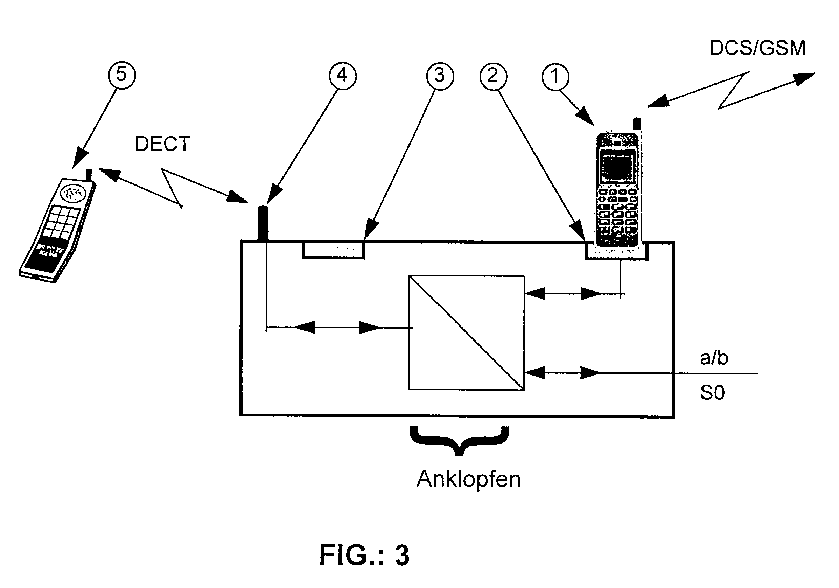

Fig. 3 soll das sogenannte "Anklopfen" veranschaulichen, bei welchem Gespräche geführt werden können, ohne befürchten zu müssen, für andere Anrufer nicht erreichbar zu sein. Ist eine Leitung besetzt, werden über die andere Leitung ankommende Gespräche durch das "Anklopfen" signalisiert.

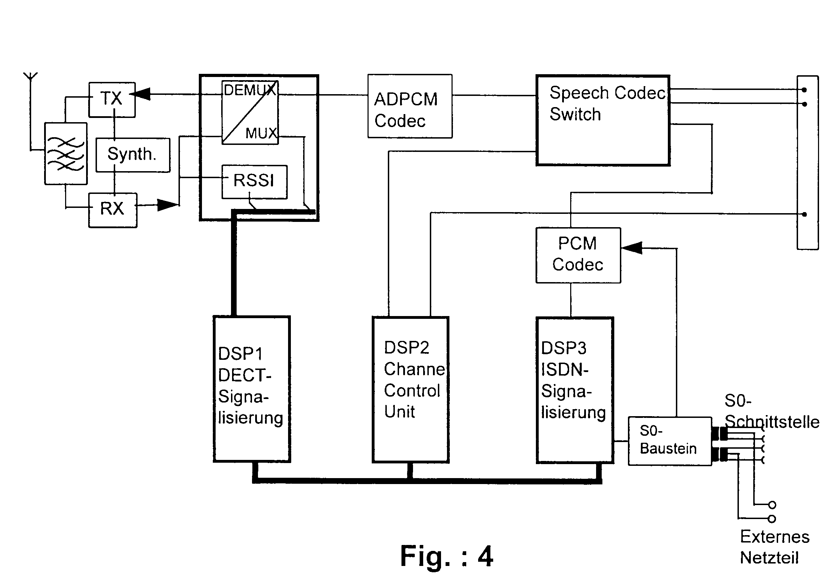

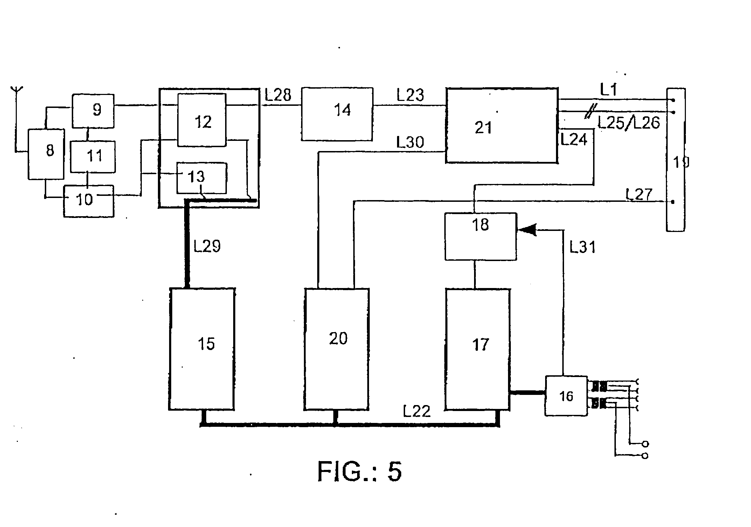

Die Fig. 4 und 5 geben einen Systemüberblick. Das dargestellte System besteht im wesentlichen aus einer Schnurlosbaugruppe DECT, einem Festnetzanschluß, ISDN-Baugruppe, eine Einrichtung zur Aufnahme eines Mobilfunkendgerätes, GSM oder DCS System Connector und einer Steuerungslogik.

Die Schnurlosbaugruppe besteht aus einem gewöhnlichen Hochfrequenzteil, das heißt Antenne, Eingangsverstärker 8, einem Sendemodul 9 und einem Empfangsmodul 10, einem Synthesizer 11, Oszillator und dergleichen, einem gewöhnlichen Daten-Signalisierungs-Multiplexer 12, 13, einem Sprachcodierer 14 sowie einem Signalisierungsmikroprozessor 15.

Der Festnetzanschluß ist beispielsweise in Form eines ISDN-Anschlusses realisiert worden. Diese Baugruppe besteht aus einer ISDN-Anschluß-Einheit 16, SO-Baustein, einem D-Kanal-Signalisierungs-Mikroprozessor 17 und einem Sprachcodierer 18.

Für die Aufnahme eines Mobilfunkendgerätes ist eine Anschlußmöglichkeit über den sogenannten System-Connector 19 vorgesehen. Der System-Connector 19 stellt in der Regel mindestens folgende Informationen zur Verfügung:
- Analog Input/Output
   Zwei Leitungen für die Übermittlung eines analogen Sprachsignals
- System Bus
   Für den gesamten im Mobilfunk anfallenden Signalisierungsverkehr ist dieser Bus vorgesehen.
- Stromversorgung

Die Steuerungslogik hat die Aufgabe, die verschiedenen Systeme in optimaler Weise miteinander zu verbinden, das gesamte System zu überwachen und dient zudem als Übersetzer bei der Umsetzung sowohl der Sprachcodierungsdaten als auch der Signalisierungsdaten der Schnurlos-, Mobilfunk- und Festnetzkomponenten. Die Steuerungslogik besteht aus einer Kanal-Steuerungseinheit - Channel Control Unit (CCU) - die das Bezugszeichen 20 trägt und einem Umschalter der Sprachcodierer, sogenannter Speech Codec Switch (SCS), der das Bezugszeichen 21 aufweist.

### Aufgaben des Umschalters der Sprachcodierer (SCS)

Die Schnurlosbaugruppe kommuniziert mit dem Gesamtsystem über einen Signalisierungsbus L 22. Die Nutzdaten, Sprachsignale, werden über die Leitungen L 23 ein- bzw. ausgelesen. Die Sprachdaten können entweder aus einer Festnetzverbindung L 24 oder aus einer Mobilfunkverbindung L 25/L 26 stammen. Der Sprachcodierer 21 hat nun in diesem Rahmen die folgenden Aufgaben zu erfüllen:
- Die Sprachdaten von den Leitungen L 25/L 26 und L 24 auf L 23 zu multiplexen bzw. die Daten von L 23 in L 25/L 26 und L 24 zu demultiplexen.
- Die Daten auf den Leitungen L 25/L 26, L 24 und L 23 werden in verschiedenen Formaten zur Verfügung gestellt. Die Umformatierung dieser Daten sowie die Anpassung an die verschiedenen Übertragungsraten, zum Beispiel durch Unter- bzw. Übertastung sowie durch das Auffüllen des Datenrahmens mit "Tailbits" ist eine weitere Aufgabe der SCS-Einheit 21.

### Aufgaben der Kanal-Steuerungseinheit

Sowohl bei den digitalen Schnurlossystemen als auch bei den Mobilfunk- oder den ISDN-Systemen wird ein Gesprächsaufbau immer durch eine Signalierungsverbindung initiiert. Die Kanal-Steuerungseinheit hat nun die folgenden Aufgaben:
- **Anpassung der Signalisierung**
   Aufgrund der Signalisierung wird eines der verschiedenen Systeme zum Verbindungsaufbau ausgesucht. Die Kanalsteuerungseinheit CCU sorgt dann für ein korrektes Abbilden der Signalisierungsinformationselemente und vermittelt somit zwischen den Systemen auf Signalisierungsebene.
- **Anklopfen**
   Besteht bereits eine Verbindung zwischen dem Schnurlosendgerät und einem der beiden Systeme (GSM oder ISDN) und wird auf die jeweils andere Leitung eine neue Verbindung signalisiert, so muß die Kanalsteuerungseinheit CCU die neue Signalisierung in das Schnurlossystem weiterleiten, auf Wunsch des Nutzers das aktive Gespräch mit Hilfe des Sprachcodierers 21 (SCS) umschalten und die alte Verbindung halten.
- **Rückfrage**
   Der Nutzer führt ein Gespräch, ausgehend von seinem Schnurlosendgerät und möchte einen weiteren Gesprächspartner erreichen. Während dieser Rückfrage wird der erste Gesprächspartner "gehalten", er kann die Rückfrage nicht mithören. Auch hier sorgt die Kanalsteuerungseinheit CCU für die notwendige Signalisierungsübermittlung.

### Zusammenspiel der verschiedenen Komponenten

### Gesprächsaufbausteuerung

Versucht der Nutzer aus seinem DECT-Portable Port, also seinem Schnurlosendgerät, eine Gesprächsverbindung aufzubauen, so wird dieses von dem als Demultiplexer ausgebildeten Daten-Signalisierungs-Multiplexer 12 an den als DECT-Signalierungsbaustein ausgebildeten Signalisierungsmikroprozessor 15 (Fig. 5) bzw. DSP 1 (Fig. 4) weitersignalisiert. In dem DSP1 (Fig. 4) bzw. 15 (Fig. 5) werden die Signalisierungsdaten ausgewertet und dann die Zieladresse mit den vollständigen Zusatzinformationen an die als Kanal-Steuerungseinheit ausgebildete DSP2 (Fig. 4) bzw. 20 (Fig. 5) weitergegeben. DSP2 errechnet aus den erhaltenen Daten die Adresse des Ausgangs, über den eine Gesprächsverbindung aufgebaut werden soll. Über den jeweiligen Signalisierungsbus L 22 bzw. L 27 werden in das jeweilige andere System, Mobilfunk oder Festnetz, die entsprechend umgesetzten Signalisierungsdaten weitergeleitet. DSP2 informiert zugleich den Sprachcodierer 21 über die gewünschte Verkehrsverbindung und schaltet somit den passenden Sprachcodierer 21 ein. Sobald eine Quittung aus dem anderen System zurücksignalisiert wird, erfolgt das Durchschalten des Sprachkanals über den Daten- und Signalisierungs-Multiplexer 12, den als Sprachcodierer (Fig. 5, Bezugszeichen 14) ausgebildeten ADPCM-Coder (Fig. 4) und über die den Sprachcodierer 21 - die SCS-Einheit - in das gewünschte Vermittlungssystem.

Die Information über die bereits bestehende Verbindung wird in der als Kanal-Steuerungseinheit 20 (Fig. 5) ausgebildeten DSP2 (CCU; Fig. 5) gespeichert. Wird auf die jeweils andere Leitung eine neue Verbindung signalisiert, so trifft diese Signalisierung in der Kanal-Steuerungseinheit 20 (DSP2) über den Signalisierungsbus L 27 bzw. den Signalisierungsbus L 22 ein. DSP2 signalisiert nun an den Nutzer durch den Signalisierungsmikroprozessor 15 (DSP1) hindurch, daß ein neuer Anruf auf der zweiten Leitung gerade angekommen ist. Auf den Wunsch des Nutzers hin schaltet die Kanal-Steuerungseinheit 20 (DSP2) das aktive Gespräch um und hält die alte Verbindung aufrecht.

Wird aus einem zweiten Schnurlosendgerät während der schon hergestellten Verkehrsverbindung versucht, über die freie Leitung parallel ein externes Gespräch aufzubauen, so wird dieses wiederum an DSP1 signalisiert. DSP2 erhält die Vermittlungsdaten, prüft, ob die gewünschte Leitung frei ist, und schaltet dann bei erfolgreicher Rücksignalisierung den zweiten Sprachkanal durch. Sind die Verbindungskanäle - zwei Kanäle ISDN, ein Kanal GSM/DCS - belegt, wird jeder weitere Versuch, aus dem Schnurlossystem herauszutelefonieren, aufgrund der im DSP2 gespeicherten Informationen unterbunden.

### Steuerung zusätzlicher Dienste

Die aus dem Mobilfunkbereich bekannten Kurzmitteilungen werden ausschließlich über Signalisierungskanäle an den Empfänger weitergeleitet. Bei Eintreffen einer Kurzmitteilung wird über den Signalisierungsbus L 27 dieses der Kanal-Steuerungseinheit 20 (DSP2) mitgeteilt. DSP2 liest über den Signalisierungsbus L 27 den Inhalt der Mitteilung aus dem Mobilfunkendgerät heraus und speichert dieses zwischen. Über die Signalisierungsverbindung zum Schnurlosendgerät wird dem Nutzer das Eintreffen der Kurzmitteilung signalisiert.

Verfügt der Nutzer über ein SMS-fähiges Schnurlosendgerät, so kann er den Inhalt der Kurzmitteilung über den Signalisierungsweg von DSP2 abrufen. Ferner ist es ihm dann auch möglich, das Verwalten des Kurzmitteilungszwischenspeichers in DSP2 über sein Schnurlosendgerät durchzuführen. In diesem Falle werden die Verwaltungsaktionen des Zwischenspeichers dazu genutzt, um die entsprechende Verwaltungs- und Aktualisierungsmaßnahme im Mobilfunkendgerät über den Signalisierungsbus L 27 zu initiieren.

Verfügt der Nutzer nicht über ein SMS-fähiges Endgerät, so kann der Empfang eines SMS durch Ton- und Lichtsignale angezeigt werden. Abruf sowie Verwaltung der SMS erfolgt in diesem Fall direkt über das Mobilfunktelefon, welches gegebenenfalls aus der Dual Mode Basisstation herausgezogen werden muß.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: DCS/GSM-Handy, Mobilfunktelefon
- 2: DCS/GSM-Ladestation mit Sprachschnittstelle
- 3: DECT-Ladestation
- 4: DECT-Antenne
- 5: DECT-Portable Part, Schnurlostelefon
- 6: Stromversorgung
- 7: DCS/GSM-Außenantenne
- 8: Eingangsverstärker
- 9: Sendemodul
- 10: Empfangsmodul
- 11: Synthesizer
- 12: Daten-Signalisierungs-Multiplexer
- 13: " " "
- 14: Sprachcodierer
- 15: Signalisierungsmikroprozessor
- 16: ISDN-Anschluß-Einheit
- 17: D-Kanal-Signalisierungs-Mikroprozessor
- 18: Sprachcodierer
- 19: System-Connector
- 20: CCU (Kanal-Steuerungseinheit)
- 21: Sprachcodierer, SCS, Speech Codec Switch

- L 22: Signalisierungsbus
- L 23: Leitung
- L 24: Festnetzverbindung
- L 25: Mobilfunkverbindung, Leitung
- L 26: " " "
- L 27: Signalisierungsbus
- L 28: Leitung
- L 29: Leitung
- L 30: Leitung
- L 31: Leitung

- ADPCM: Adaptive Differential Pulse Code Modulation
- ADPCMI: " " " " " Input
- ADPCMO: " " " " " Output

- AI SYSCT: Audio Input vom System Connector
- AIPCM: " " vom PCM Coder

- AO SYSCT: Audio Output vom System Connector
- AO PCM: " " vom PCM Coder
- ccu: Channel Control Unit, Kanalsteuerungseinheit
- CCU CLK: Clock Signal

- DCS: Digital Communication System
- DECT: Digital European Cordless Telecommunications, Schnurlosbaugruppe
- DEMUX: Demultiplexer
- DSP1, 2, 3: Digital Signal Prozessor
- Dual Band Telefon: Ein Telefon, das in der Lage ist, zwei unterschiedliche Systeme (Frequenzen) zu bedienen
- Dual Mode Telefon: Ein Telefon, das in der Lage ist, zwei technisch unterschiedliche Systeme zu bedienen

- EN (Read): Enable
- FP: Fixed Part
- GSM: Global System for Mobiles or Mobile Communication
- ISDN: Integrated Services Digital Network
- LNA: Low Noise Amplifier
- MMI: Man Machine Interface
- Multi Band: Ein Telefon, das in der Lage ist, mehrere unterschiedliche Frequenzbänder eines gleichen technischen Basisstandards zu bedienen
- Multi Mode: Ein Telefon, das in der Lage ist, mehrere technisch unterschiedliche Systeme zu bedienen
- MUX: Multiplexer
- PCM: Pulse Code Modulation
- PP: Portable Part (DECT-Schnurlostelefon)
- PSTN: Public Switched Telephone Network
- RAMSEL: Steuersignal für den Speicher
- ROM ISDM: Speicher für ISDN Daten
- ROM DECT: Speicher für DECT Daten
- RSTROB: Lesebefehl
- RSSI: Received Signal Strength Indicator
- scs: Speech Codec Switch, Umschalter, Sprachcodierer
- SIG BUS: Signalisierungsbus
- SMS: Short Massage
- Synth.: Synthesiser
System Connector
- TONGNI: Tongenerator-Eingang
- TONGNO: Tongenerator-Ausgang
- WSTROB: Schreibbefehl

### Literaturverzeichnis

- WO: 90/14729 A
- WO: 94/17639 A1
- WO: 95/01070 A
- WO: 95/23485 A

- DE: 40 26 180 A1
- DE: 43 10 230 A1
- DE: 43 29 721 A1
- DE: 44 00 832 A1
- DE: 195 20 024 A

- EP: 0 660 628 A
- EP: 0 740 482 A

- US: 54 22 934

- Hänggi A.:: Die ganz besonderen Leistungsmerkmale.
- In:: tec 2/93, S. 7- 9
- Binggeli H.:: Die schnurlose Telefonzelle im Taschenformat.
- In:: tec ¾ 91, S. 22 - 24

## Patentansprüche

1. Verfahren zum gleichzeitigen oder getrennten Benutzen von Mobilfunk- und Festnetzanschlüssen in geschlossenen Räumen unter Verwendung von mindestens je einem Schnurlostelefon (5) und mindestens je einem Mobilfunktelefon (Handy; DCS/GSM 1), mit mindestens einer Basisstation, mit der das Schnurlostelefon (5) über eine DECT-Antenne in Verbindung steht, einem Adapter zum Anordnen durch vorzugsweise Einstecken des DCS/GSM-Handy (1) in der Basisstation, einer in der Basisstation angeordneten Sprachschnittstelle (2), wobei durch das Anordnen des DCS/GSM-Handy in der Basisstation die Basisstation Mobilfunksignale empfangen kann, die dann in der Basisstation in DECT-Signale umsetzbar sind und über die DECT-Antenne (4) an das Schnurlostelefon (5) weitergeleitet werden und in ähnlicher Weise auch die PSTN/ISDN-Signale umsetzbar und über DECT abstrahlbar sind, wobei sowohl PSTN-Anrufe als auch Mobilfunkanrufe im Schnurlostelefon (5) entgegennehmbar sind, jedoch nach dem Entkoppeln des DCS/GSM-Handy von der Basisstation Mobilfunkanrufe unmittelbar über das Mobilfunkendgerät (DCS/GSM-Handy; 1) entgegennehmbar sind, während weiterhin Anrufe aus dem Festnetz zum Schnurlostelefon (5) durchzuführen sind, wobei über eine Ausscheidungskennziffer - zum Beispiel "0" für PSTN oder "7" für Mobilfunk - die Möglichkeit gegeben ist, eine Verbindung sowohl über das Festnetz als auch über das Mobilfunknetz aufzubauen, wobei beim Führen von Gesprächen ankommende Anrufe über eine andere Leitung durch "Anklopfen" signalisierbar sind, und daß antreffende Kurzmitteilungen akustisch und/oder visuell anzeigbar sind, und daß die Steuerungslogik die verschiedenen Systeme (DECT bzw. DCS/GSM) in optimaler Weise miteinander verbindet und das gesamte System überwacht und außerdem zur Umsetzung sowohl der Sprachcodierungsdaten als auch der Signalisierungsdaten der Schnurlos-, Mobilfunk- und Festnetzkomponenten dient, mit einer Steuerungslogik, die eine Kanal-Steuerungseinheit (CCU; 20) und einen Umschalter für den Sprachcodierer (SCS; 21) aufweist.

2. Verfahren nach Anspruch 1, **dadurch gekennzeichnet,** daß bei ausgehenden Rufen gilt: ist eine Leitung besetzt, so kann ein anderes Schnurlostelefon (5) ein Gespräch über eine andere Leitung (Mobilfunk- oder Festnetzleitung) aufbauen.

3. Verfahren nach Anspruch 1 oder 2, mit einem Schnurlostelefon (5) als DECT-Portable Part und einem üblichen Hochfrequenzteil, im wesentlichen bestehend aus Antenne, Eingangsverstärker (8), Sende- und Empfangsmodul (9 bzw. 10), Synthesizer (11), Oszillator und dergleichen, einem üblichen Daten-Signalisierungs-Multiplexer (12, 13), einem Sprachcodierer (14) sowie einem Signalisierungsmikroprozessor (15), wobei der Festnetzanschluß beispielsweise in Form eines ISDN-Anschlusses realisiert ist, mit einer ISDN-Anschluß-Einheit (16), SO-Baustein, einem D-Kanal-Signalisierungs-Mikroprozessor (17) und einem Sprachcodierer (18), wobei die Basisstation einen Anschluß über einen System-Connector (19) aufweist, der folgende Aufgaben hat:
- Analog Input/Output: Zwei Leitungen für die Übermittlung eines analogen Sprachsignals;
- Systembus für den gesamten im Mobilfunk anfallenden Signalisierungsverkehr
- Stromversorgung.

4. Verfahren nach Anspruch 1 oder einem der darauffolgenden Ansprüche, **dadurch gekennzeichnet**, daß die Schnurlosbaugruppe mit dem Gesamtsystem über einen Signalisierungsbus (L 22) kommuniziert, während die Nutzdaten und Sprachsignale über eine Leitung (L 23) ein- und auslesbar sind, wobei die Sprachdaten entweder aus einer Festnetzverbindung (L 24) oder aus einer Mobilfunkverbindung (L 25/26) stammen, wobei der Sprachcodierer (21) folgende Aufgaben erfüllt:
a) Die Sprachdaten von den Leitungen (L 25/L 26) und der Leitung (L 24) auf die Leitung (L 23) zu multiplexen bzw. die Daten von der Leitung (L 23) in (L 25/L 26) und (L 24) zu demultiplexen;
b) die auf den Leitungen (L 25/L 26, L 24 und L 23) in verschiedenen Formaten zur Verfügung gestellten Daten umzuformatieren und an verschiedene Übertragungsraten - zum Beispiel durch Unter- bzw. Übertastung sowie durch das Auffüllen des Datenrahmens mit "Tailbits" - anzupassen.

5. Verfahren nach Anspruch 1 oder einem der darauffolgenden Ansprüche, **dadurch gekennzeichnet**, daß sowohl bei dem digitalen Schnurlossystem als auch bei dem Mobilfunk- oder dem ISDN-System ein Systemaufbau immer durch eine Signalisierungsverbindung initiiert wird, wobei die Kanal-Steuerungseinheit (20) folgende Aufgaben hat:
a) Anpassung der Signalisierung (aufgrund der Signalisierung wird eines der verschiedenen Systeme zum Verbindungsaufbau gesucht, wobei die Kanal-Steuerungseinheit (20) für eine korrekte Abbildung der Signalisierungsinformationselemente sorgt und zwischen den Systemen auf der Signalisierungsebene vermittelt);
b) Anklopfen (besteht bereits eine Verbindung zwischen dem Schnurlostelefon (5) und einem der beiden Systeme (GSM oder ISDN) und wird auf die jeweils andere Leitung eine neue Verbindung signalisiert, muß die Kanal-Steuerungseinheit (20) die neue Signalisierung in das Schnurlossystem zu dem Schnurlostelefon (5) weiterleiten, auf Wunsch des Nutzers das aktive Gespräch mit Hilfe des Sprachcodierers (21) umschalten und die alte Verbindung halten);
c) Rückfrage (Der Nutzer führt ein Gespräch, ausgehend von einem Schnurlostelefon (5) und möchte einen weiteren Gesprächsaufbau erreichen, wobei während dieser Rückfrage der erste Gesprächspartner "gehalten" wird, allerdings ohne die Rückfrage mithören zu können, wobei die Kanal-Steuerungseinheit (20) für die notwendige Signalisierungsübermittlung sorgt).

6. Verfahren nach Anspruch 1 oder einem der darauffolgenden Ansprüche, **dadurch gekennzeichnet,** daß beim Versuch des Nutzers aus einem Schnurlostelefon (5) eine Gesprächsverbindung aufzubauen dieses von dem als Demultiplexer ausgebildeten Datensignalisierungs-Multiplexer (12) an den DCT-Signalisierungsmikroprozessor (15; DSP1) weitersignalisiert, wobei in dem Signalisierungsmikroprozessor (15) die Signalisierungsdaten ausgewertet und dann die Zieladresse mit den vollständigen Zusatzinformationen an die Kanal-Steuerungseinheit (CCU; DESP2) weitergebbar sind, die aus den erhaltenen Daten die Adresse des Ausgangs errechnet, über den eine Gesprächsverbindung aufgebaut werden soll, wobei über den Signalisierungsbus (L 22 bzw. L 27) in das jeweilige andere System (Mobilfunk oder Festnetz) die entsprechend umgesetzten Signalisierungsdaten weiterleitbar sind, wobei die Kanal-Steuerungseinheit (DSP2; 20) zugleich den Sprachcodierer (SCS; 21) über die gewünschte Verkehrsverbindung informiert und somit den passenden Sprachcodierer einschaltet, und daß sobald eine Quittung aus dem jeweils anderen System zurücksignalisiert wird, das Durchschalten des Sprachkanals über den als Demultiplexer ausgebildeten Daten-Signalisierungs-Multiplexer (12), den Sprachcodierer (14; ADPCM-Codec) und über den Sprachcodierer (21) in das gewünschte Vermittlungssystem erfolgt, während die Information über die bereits bestehende Verbindung in der Kanal-Steuerungseinheit (20) gespeichert wird, wobei beim Signalisieren einer neuen Verbindung über die jeweils andere Leitung diese Signalisierung in der Kanal-Steuerungseinheit (20; DSP2) über den Signalisierungsbus (L 27) bzw. den Signalisierungsbus (L22) erfolgt, woraufhin die Kanal-Steuerungseinheit (20) nun an den Nutzer über den Signalisierungsmikroprozessor (15; DSP1) signalisiert, daß ein neuer Anruf auf der zweiten Leitung gerade angekommen ist, wobei auf Wunsch des Nutzers hin die Kanal-Steuerungseinheit (20; DSP2) das aktive Gespräch umschaltet und die alte Verbindung aufrechterhält.

7. Verfahren nach Anspruch 1 oder einem der darauffolgenden Ansprüche, **dadurch gekennzeichnet**, daß beim Versuch, aus einem weiteren Schnurlostelefon (5) während einer schon etablierten Verkehrsverbindung über die freie Leitung parallel ein externes Gespräch aufzubauen dieses wiederum an den Signalisierungsmikroprozessor (15; DSP1) signalisiert wird, woraufhin die Kanal-Steuerungseinheit (20; DSP2) die Vermittlungsdaten erhält, diese überprüft, ob die gewünschte Leitung frei ist und dann bei erfolgter Rücksignalisierung den zweiten Sprachkanal durchschaltet.

8. Verfahren nach Anspruch 7, **dadurch gekennzeichnet**, daß in den Fällen, in denen die Verbindungskanäle - zwei Kanäle ISDN, ein Kanal GSM/DCS - belegt sind, jeder weitere Versuch aus dem Schnurlossystem herauszutelefonieren, aufgrund der in der Kanal-Steuerungseinheit (20; DSP2) gespeicherten Informationen unterbunden wird.

9. Verfahren nach Anspruch 1 oder einem der darauffolgenden Ansprüche, **dadurch gekennzeichnet,** daß die aus dem Mobilfunkbereich bekannten Kurzmitteilungen ausschließlich über Signalisierungskanäle an den Empfänger weiterleitbar sind, wobei beim Eintreffen einer Kurzmitteilung über den Signalisierungsbus (L 27) dieses der Kanal-Steuerungseinheit (20; DSP2) mitgeteilt wird und die Kanal-Steuerungseinheit (20) über den Signalisierungsbus (L 27) die Mitteilung herausliest und diese zwischenspeichert und daß über die Signalisierungsverbindung zum Schnurlostelefon (5) dem Nutzer das Eintreffen der Kurzmitteilung signalisierbar ist.

10. Verfahren nach Anspruch 9, **dadurch gekennzeichnet**, daß in den Fällen, in denen der Nutzer über ein SMS-fähiges Schnurlosendgerät (Schnurlostelefon 5) verfügt, dieser den Inhalt der Kurzmitteilung über den Signalisierungsweg von der Kanal-Steuerungseinheit (20; DSP2) abrufen kann oder auch über die Kanal-Steuerungseinheit (20) derartige Daten über sein Schnurlosendgerät (5) verwalten kann, wobei in diesem Falle die Verwaltungsaktionen dazu benutzt werden, um die entsprechende Verwaltungs- und Aktualisierungsmaßnahme im Mobilfunk-endgerät (Handy; 1) über den Signalisierungsbus (L 22) zu initiieren, während in den Fällen, in denen der Nutzer nicht über ein SMS-fähiges Endgerät verfügt der Empfang eines SMS durch Ton- oder Lichtsignale anzeigbar ist, wobei Abruf und Verwaltung der SMS in diesem Falle unmittelbar über das Mobilfunktelefon (1) erfolgt, welches hierzu aus der Dual Mode Basisstation herausgezogen werden muß (entkoppelt ist).

## Claims

1. Process for simultaneously or separately using mobile radio and fixed network connections in enclosed areas, using at least one cordless telephone (5) and at least one mobile radio telephone (portable or mobile telephone; DCS/GSM 1), with at least one base station to which the cordless telephone (5) is connected via a DECT antenna, an adapter for mounting, preferably plugging, the DCS/GSM mobile (1) into the base station, a speech interface (2) provided in the base station, whilst by mounting the DCS/GSM mobile in the base station the base station is enabled to receive mobile radio signals which can then be converted into DECT signals in the base station and are transmitted on to the cordless telephone (5) via the DECT antenna (4) and in a similar manner the PSTN/ISDN signals can also be converted and transmitted via DECT, both PSTN calls and mobile radio calls being capable of being received in the cordless telephone (5), but after the uncoupling of the DCS/GSM mobile from the base station mobile radio calls can be received directly via the mobile radio end equipment (DCS/GSM mobile; 1), whilst calls can still be routed from the fixed network to the cordless telephone (5), it being possible, by means of a dialling prefix - e.g. "0" for PSTN or "7" for mobiles - to establish a connection both through the fixed network and through the mobile radio network, whilst incoming calls during conversations can be signalled through another line by a "call waiting" signal, and incoming short messages can be indicated acoustically and/or displayed visually, and the control logic optimally connects the different systems (DECT and DCS/GSM) and monitors the system as a whole and moreover serves to convert both the speech coding data and also the signalling data of the cordless, mobile radio and fixed network components, with a control logic which has a channel control unit (CCU; 20) and a switch for the speech coder (SCS; 21).

2. Process according to claim 1, characterised in that, in the case of outgoing calls: if a line is busy, another cordless telephone (5) is able to set up a conversation on another line (mobile radio or fixed network line).

3. Process according to claim 1 or 2, with a cordless telephone (5) as the DECT Portable Part and a conventional high frequency part consisting essentially of antenna, input amplifier (8), transmitting and receiving module (9 and 10, respectively), synthesiser (11), oscillator and the like, a conventional data signalling multiplexer (12, 13), a speech coder (14) and a signalling microprocessor (15), the fixed network connection being in the form of an ISDN connection, for example, having an ISDN connection unit (16), SO module, a D-channel signalling microprocessor (17) and a speech coder (18), the base station having a connection via a system connector (19) which has the following functions:
- analog input/output: two lines for transmitting an analogue speech signal;
- system bus for the entire signalling traffic occurring in the mobile radio
- power supply.

4. Process according to claim 1 or one of the following claims, characterised in that the cordless assembly communicates with the entire system via a signalling bus (L 22), while the service data and speech signals can be read in and out through a line (L 23), the speech data originating either from a fixed network connection (L 24) or from a mobile radio connection (L 25/26), the speech coder (21) performing the following tasks:
a) multiplexing the speech data from the lines (L 25/L 26) and the line (L 24) to the line (L 23) or demultiplexing the data from the line (L 23) into (L 25/L 26) and (L 24);
b) reformatting the data provided on the lines (L 25/L 26, L 24 and L 23) in various formats and adapting to different transmission rates, for example by under- or overscanning and by filling the data frame with "tail bits".

5. Process according to claim 1 or one of the following claims, characterised in that a system set-up is always initiated by a signalling connection, both in the digital cordless system and in the mobile radio or ISDN system, the channel control unit (20) having the following functions:
a) adapting the signalling (on the basis of the signalling, one of the various systems is sought to set up a connection, the channel control unit (20) ensuring correct imaging of the signalling information elements and switching between the systems at the signalling level) ;
b) signalling "call waiting" (if there is already a connection between the cordless telephone (5) and one of the two systems (GSM or ISDN) and if a new connection is signalled to the other line in each case, the channel control unit (20) has to transmit the new signal into the cordless system to the cordless telephone (5), and at the user's request switch over the active conversation using the speech coder (21) and hold the old connection);
c) enquiries (the user is conducting a conversation from a cordless telephone (5) and would like to set up another conversation, the first conversation partner being put "on hold" during this enquiry but without being able to listen in to the enquiry, the channel control unit (20) providing the necessary signal transmission).

6. Process according to claim 1 or one of the following claims, characterised in that as the user attempts to establish a speech connection from a cordless telephone (5), this is signalled on from the data signal multiplexer (12) constructed as a demultiplexer, to the DCT signalling microprocessor (15; DSP 1), while in the signalling microprocessor (15) the signalling data are evaluated and then the target address with the full additional information can be passed on to the channel control unit (CCU; DESP 2), the address of the output through which a speech connection is to be established is calculated from the data obtained, whilst the correspondingly converted signalling data can be passed on to the other system in each case (mobile radio or fixed network) by means of the signalling bus (L 22 or L 27), the channel control unit (DSP2; 20) simultaneously informing the speech coder (SCS; 21) via the desired traffic connection and thus switching on the appropriate speech coder, and in that an acknowledgement is immediately signalled back from the other system in each case, the speech channel is switched through into the desired switching system via the data signalling multiplexer (12) constructed as a demultiplexer, via the speech coder (14; ADPCM-Codec) and via the speech coder (21), whilst the information relating to the existing connection is stored in the channel control unit (20), and during signalling of a new connection via the other line in each case, this signalling takes place in the channel control unit (20; DSP2) via the signalling bus (L 27) or the signalling bus (L 22), whereupon the channel control unit (20) then signals to the user, via the signalling microprocessor (15; DSP1) that a new call has just come in on the second line, and at the request of the user the channel control unit (20; DSP2) will switch over the active conversation and maintain the old connection.

7. Process according to claim 1 or one of the following claims, characterised in that when an attempt is made to set up a parallel external conversation from another cordless telephone (5) on the free line, during an already established traffic connection, this is in turn signalled to the signalling microprocessor (15; DSP1), whereupon the channel control unit (20; DSP2) receives the switching data, checks them to establish whether the desired line is free and then, having signalled back, switches the second speech channel through.

8. Process according to claim 7, characterised in that in those cases where the connecting channels (two ISDN channels, one GSM/DCS channel) are busy, every additional attempt to telephone out from the cordless system is prevented on account of the information stored in the channel control unit (20; DSP2).

9. Process according to claim 1 or one of the following claims, characterised in that the short messages known in mobile telephony can only be transmitted to the receiver through signalling channels, whilst when a short message comes in through the signalling bus (L 27) it is passed to the channel control unit (20; DSP2) and the channel control unit (20) reads out the message via the signalling bus (L 27) and temporarily stores it and the arrival of the short message can be signalled to the user via the signalling connection to the cordless telephone (5).

10. Process according to claim 9, characterised in that, in those cases where the user has SMS-capable cordless equipment (cordless telephone 5), he can call up the contents of the short message via the signalling pathway from the channel control unit (20; DSP2) or can manage such data through the channel control unit (20) using his cordless equipment (5), whilst in this case the managing procedures are used to initiate the corresponding management and updating measures in the mobile radio end equipment (mobile; 1) through the signalling bus (L22), whilst in those cases where the user does not have SMS-capable equipment the receiving of an SMS can be indicated by audible or light signals, the calling up and management of the SMS in this case being carried out directly via the mobile radio telephone (1) which has to be removed (uncoupled) from the dual mode base station for this purpose.

## Revendications

1. Procédé pour l'utilisation simultanée ou séparée de branchements de radiotéléphonie mobile et de réseau fixe dans des locaux fermés, en utilisant respectivement au moins un téléphone sans fil (5) et au moins un téléphone portable DSC/GSM (1), avec au moins une station de base à laquelle le téléphone sans fil (5) est reliée par l'intermédiaire d'une antenne DECT, un adaptateur pour disposer de préférence par emboîtement le téléphone portable DSC/GSM (1) dans la station de base, et une interface phonique (2) disposée dans la station de base, la station de base pouvant recevoir, du fait de la disposition du téléphone portable DSC/GSM dans la station de base, des signaux de radiotéléphonie mobile qui peuvent être ensuite convertis dans la station de base en signaux DECT et transmis par l'intermédiaire de l'antenne DECT (4) au téléphone sans fil (5), les signaux PSTN/ISDN pouvant être également convertis d'une manière analogue et émis par l'intermédiaire de l'antenne DECT, le téléphone sans fil (5) pouvant recevoir tant des appels PSTN que des appels de radiotéléphonie mobile, les appels de radiotéléphonie mobile pouvant toutefois être reçus directement au moyen du téléphone portable DSC/GSM (1) après avoir désaccouplé le téléphone portable DSC/GSM de la station de base, tandis que les appels provenant du réseau fixe continuent à devoir être traités par le téléphone sans fil (5), un chiffre distinctif - par exemple « 0 » pour PSTN ou « 7 » pour la radiotéléphonie mobile - donnant la possibilité d'établir une liaison tant par l'intermédiaire du réseau fixe que par l'intermédiaire du réseau de radiotéléphonie mobile, les appels reçus au moyen d'une autre ligne en cours de communication pouvant être signalés par « signal d'appel », et en ce que des messages courts entrants peuvent être affichés acoustiquement et/ou visuellement, et en ce que la logique de commande relie entre eux les différents systèmes (DECT et DCS/GSM) de façon optimale, surveille l'ensemble du système et utilise en outre pour la conversion tant les données de codage phonique que les données de signalisation des éléments sans fil, de radiotéléphonie mobile et de réseau fixe, avec une logique de commande qui présente une unité de commande de canaux (CCU ; 20) et un commutateur pour le codeur phonique (SCS ; 21).

2. Procédé selon la revendication 1, **caractérisé** en ce que la situation est la suivante pour les appels sortants : si une ligne est occupée, un autre téléphone sans fil (5) peut établir une communication au moyen d'une autre ligne (ligne de radiotéléphonie mobile ou de réseau fixe).

3. Procédé selon la revendication 1 ou 2, avec un téléphone sans fil (5) comme élément sans fil DECT et une partie classique à haute fréquence, constituée pour l'essentiel d'une antenne, d'un amplificateur d'entrée (8), d'un module émetteur et d'un module récepteur (9 et 10), d'un synthétiseur (11), d'un oscillateur et analogues, d'un multiplexeur classique de signalisation de données (12, 13), d'un codeur phonique (14) et d'un microprocesseur de signalisation (15), le branchement de réseau fixe étant réalisé par exemple sous la forme d'un branchement ISDN comprenant une unité de branchement ISDN (16), un module SO, un microprocesseur de signalisation de canal D (17) et un codeur phonique (18), et la station de base présentant un branchement au moyen d'un Connecteur Système (19) qui remplit les fonctions suivantes :
- entrée-sortie analogique : deux lignes pour la transmission d'un signal phonique analogique ;
- bus système pour l'ensemble du trafic de signalisation produit en radiotéléphonie mobile
- alimentation électrique.

4. Procédé selon la revendication 1 ou une des revendications suivantes, **caractérisé** en ce que le sous-ensemble sans fil communique avec l'ensemble du système au moyen d'un bus de signalisation (L22), tandis que les données utiles et les signaux phoniques peuvent être reçus et transmis au moyen d'une ligne (L23), les données phoniques provenant soit d'une liaison de réseau fixe (L24), soit d'une liaison de radiotéléphonie mobile (L25/L26), et le codeur phonique (21) remplissant les fonctions suivantes :
a) multiplexer les données phoniques des lignes (L25/L26) et de la ligne (L24) sur la ligne(L23), ou démultiplexer les données de la ligne (L23) en (L25/L26) et (L24) ;
b) reformater les données mises à disposition sous différents formats sur les lignes (L25/L26, L24 et L23), et les adapter à différentes vitesses de transmission - par exemple par modulation ou démodulation ainsi qu'en remplissant le cadre-données de « bits de fin » -.

5. Procédé selon la revendication 1 ou une des revendications suivantes, **caractérisé** en ce que, tant pour le système sans fil numérique que pour le système de radiotéléphonie mobile ou ISDN, l'établissement du système est toujours déclenché par une liaison de signalisation, l'unité de commande de canaux (20) remplissant les fonctions suivantes
a) adaptation de la signalisation (sur la base de la signalisation, recherche d'un des différents systèmes pour l'établissement de la liaison, l'unité de commande de canaux (20) assurant une reproduction correcte des éléments d'information de signalisation et les transmettant entre les systèmes au niveau de signalisation) ;
b) signal d'appel (s'il existe déjà une liaison entre le téléphone sans fil (5) et un des deux systèmes (GSM ou ISDN) et si une nouvelle liaison est signalée sur l'autre ligne respective, l'unité de commande de canaux (20) doit transmettre la nouvelle signalisation dans le système sans fil vers le téléphone sans fil (5), commuter à la demande de l'utilisateur le dialogue actif à l'aide du codeur phonique (21), et maintenir l'ancienne liaison) ;
c) rappel (l'utilisateur est en cours de communication à partir d'un téléphone sans fil (5) et souhaiterait obtenir l'établissement d'un autre dialogue, le premier interlocuteur étant « maintenu en attente » pendant ce rappel sans pouvoir toutefois entendre le rappel, l'unité de commande de canaux (20) assurant la transmission de signalisation nécessaire).

6. Procédé selon la revendication 1 ou une des revendications suivantes, **caractérisé** en ce que, lors de la tentative de l'utilisateur d'établir une liaison phonique à partir d'un téléphone sans fil (5), la signalisation de cette tentative est transmise par le multiplexeur de signalisation de données (12), conçu comme démultiplexeur, au microprocesseur de signalisation DCT (15 ; DSP1), les données de signalisation étant interprétées dans le microprocesseur de signalisation (15), à la suite de quoi l'adresse de destination, avec les informations supplémentaires complètes, peut être transmise à l'unité de commande de canaux (CCU ; DESP2), qui calcule à partir des données reçues l'adresse de la sortie au moyen de laquelle doit être établie une liaison phonique, les données de signalisation, adéquatement converties, pouvant être transmises par l'intermédiaire du bus de signalisation (L22 ou L27) dans l'autre système respectif (radiotéléphonie mobile ou réseau fixe), l'unité de commande de canaux (DSP2 ; 20) informant en même temps le codeur phonique (SCS ; 21) de la liaison de trafic souhaitée et enclenchant ainsi le codeur phonique approprié, et en ce que, dès qu'un accusé de réception est signalé en retour par l'autre système respectif, la connexion du codeur phonique dans le système de transmission souhaité s'effectue au moyen du multiplexeur de signalisation de données (12) conçu comme démultiplexeur, du codeur phonique (14; ADPCM-Codec) et du codeur phonique (21), tandis que l'information concernant la liaison déjà existante est mémorisée dans l'unité de commande de canaux (20) et, lors de la signalisation d'une nouvelle liaison au moyen de l'autre ligne respective, cette signalisation s'effectue dans l'unité de commande de canaux (20; DSP2) au moyen du bus de signalisation (L27) ou respectivement du bus de signalisation (L22), à la suite de quoi l'unité de commande de canaux (20) signale maintenant à l'utilisateur, au moyen du microprocesseur de signalisation (15 ; DSP1), qu'un nouvel appel vient d'arriver sur la deuxième ligne, l'unité de commande de canaux (20 ; DSP2), à la demande de l'utilisateur, commutant alors le dialogue actif et maintenant l'ancienne liaison.

7. Procédé selon la revendication 1 ou une des revendications suivantes, **caractérisé** en ce que, lors de la tentative, pendant une liaison de trafic déjà établie, d'établir à partir d'un autre téléphone sans fil (5) un dialogue externe en parallèle au moyen de la ligne libre, cette tentative est à nouveau signalée au microprocesseur de signalisation (15 ; DSP1), à la suite de quoi l'unité de commande de canaux (20; DSP2) reçoit les données de transmission, vérifie si la ligne souhaitée est libre puis, une fois la signalisation en retour effectuée, connecte le deuxième canal phonique.

8. Procédé selon la revendication 7, **caractérisé** en ce que, dans les cas où les canaux de liaison - deux canaux ISDN, un canal GSM/DCS - sont occupés, toute nouvelle tentative de téléphoner à partir du système sans fil est empêchée sur la base des informations mémorisées dans l'unité de commande de canaux (20 ; DSP2).

9. Procédé selon la revendication 1 ou une des revendications suivantes, **caractérisé** en ce que les messages courts connus dans le domaine de la radiotéléphonie mobile peuvent être transmis au destinataire exclusivement au moyen des canaux de signalisation, un message court arrivant au moyen du bus de signalisation (L27) étant transmis à l'unité de commande de canaux (20 ; DSP2), et l'unité de commande de canaux (20 ; DSP2) lisant l'information au moyen du bus de signalisation (L27) et la mémorisant provisoirement, et en ce que l'arrivée du message court peut être signalée à l'utilisateur au moyen de la liaison de signalisation vers le téléphone sans fil (5).

10. Procédé selon la revendication 9, **caractérisé** en ce que, dans les cas où l'utilisateur dispose d'un appareil terminal sans fil compatible SMS (téléphone sans fil 5), il peut, au moyen de la voie de signalisation, obtenir le contenu du message court auprès de l'unité de commande de canaux (20 ; DSP2), ou encore il peut, au moyen de l'unité de commande de canaux (20), gérer de telles données à l'aide de son appareil terminal sans fil (5), les actions de gestion pouvant dans ce cas être utilisées pour déclencher les mesures correspondantes de gestion et d'actualisation dans l'appareil terminal de radiotéléphonie mobile (téléphone portable 1) par l'intermédiaire du bus de signalisation (L22), tandis que dans les cas où l'utilisateur ne dispose pas d'un appareil terminal compatible SMS, la réception d'un SMS peut être indiquée par des signaux sonores ou lumineux, l'obtention et la gestion des SMS s'effectuant dans ce cas directement au moyen du téléphone portable (1), qui doit à cet effet être retiré de la station de base Dual Mode (c'est-à-dire qui en est désaccouplé).
